# EUROPEAN PATENT APPLICATION

(11) **EP 4 465 260 A1**
(43) Date of publication of application: **20.11.2024**
(21) Application number: 23174084.6
(22) Date of filing: 17.05.2023
(51) Int. Cl.: G06V 20/69

(54) **METHOD FOR DETERMINING SUB-VISIBLE PARTICLES IN A TEST SAMPLE**

(71) Applicant: Ares Trading S.A., 1170 Aubonne, VD (CH)
(72) Inventor: Satwekar, Abhijeet, 00012 Guidonia Montecelio (RM) (IT); Sharfudheen, Puthan Veettil, 560095 Koramangala, Bangalore (IN); Easwaran, Nikila Varshini, 560095 Koramangala, Bangalore (IN); Kuppusami, Varshini, 560095 Koramangala, Bangalore (IN); Sripada, Sriharsha, 560095 Koramangala, Bangalore (IN)
(74) Representative: Merck Serono S.A. Intellectual Property

(57) **Abstract**

There is provided a method for determining particulate matter in an analytical sample. In particular the method can be used for quality control and batch release as part of a process for manufacturing biological active ingredients such as drug substance and drug product.

## Description

### Field of the Invention.

The invention is directed to methods of determining sub-visible particles in a test sample, such as a sample from a manufacturing process for producing a biologic product.

### Background

In manufacturing a biologic medicinal product the process includes a stepwise process which includes the isolation and purification of the biologic medicinal product (drug substance). In most such processes, the drug substance is provided in a solution. The drug substance is further prepared to reside in a stable formulation containing the drug substance (drug product). The drug product often times is also a formulated solution. These solutions containing the drug substance or drug product need to comply with certain quality standards, such as being free from certain amounts of particles, including sub-visible particles. These particles could for example be agglomerates of proteinaceous material or fibers.

Particle classification is a topic of high importance, as health authorities are seeking accuracy and consistency in particle classification. Particle classification is a tedious and time-consuming process when done manually. Further, when done manually it is more prone to errors in identifying such particles. Therefore, there is a need to improve accuracy in identifying the presence of particulate materials, including sub-visible particulate matter, in a biologic sample and there is a need to reduce the time to analyze such biologic sample in a manufacturing process for producing biologic medicinal products.

### Summary of the Invention.

The present invention provides a solution to improve accuracy and time consumption for analyzing a biologic sample for the presence of particulate matter. An automated the process of particle classification based on a hybrid technique that uses deep learning and image processing is provided by the present invention. The method of the present invention includes the extraction of morphological features from images using a transfer learning based Convolutional Neural network (CNN) for example Inception-V3. These additional features made a significant impact in the model performance. Morphological features identified by the domain experts along with the features extracted from the deep learning model are being fed to a machine learning based classifier (Decision Tree). The particles can be classified into their respective classes with an accuracy of 88%. Through a user interface (UI), users are given the provision to modify or correct any misclassifications made by the model. Once a significant amount of data has been collected the retraining pipeline can be triggered to improve the model performance.

In one embodiment the method provides a computer implemented method to determine sub-visible particles in a sample comprising:
a. Obtaining one or more data files, such as raw data formats, and/or images of a sample from an analytical equipment, wherein the data files represent image information from an analyzed sample,
b. Extracting morphological feature information from the data files and/or images from the analyzed sample,
c. Classifying each image of the analyzed sample using a trained convolutional neural network in major categories,
d. Clustering of the images within the major categories into sub-clusters based on image similarity feature information from the sample images,
e. Applying a statistical analysis comparing within the major categories the sub-clusters on morphological features and/or image similarity to obtain a statistical value for one sample, and
f. Evaluating the statistical values to determine the distribution of sub-visible particles in a sample.

In another embodiment the method provides a computer implemented method for batch release based on subvisible particles in a sample from a batch comprising:
a. Obtaining one or more data files, such as raw data formats, and/or images of a sample from an analytical equipment, wherein the data files represent image information from an analyzed sample image,
b. Extracting morphological feature information from the data files and/or images from the analyzed sample,
c. Classifying each image of the analyzed sample using a trained convolutional neural network in major categories,
d. Clustering of the images within the major categories into sub-clusters based on morphological feature information from the sample images,
e. Applying a statistical analysis comparing within the major categories the sub-clusters on morphological features and/or image similarity to obtain a statistical value for one sample,
f. Comparing the statistical value for one sample with a reference sample, and
g. Releasing the batch from which the sample is obtained if the sample is within a predetermined confidence level compared to the reference sample

In yet another embodiment there is provided a non-transitory computer readable medium comprising machine readable instructions arranged, when executed by one or more processors, to cause the one or more processors to carry out the method of the current invention.

### Drawings

Figure 1. Morphological conditions to filter images into different classes.

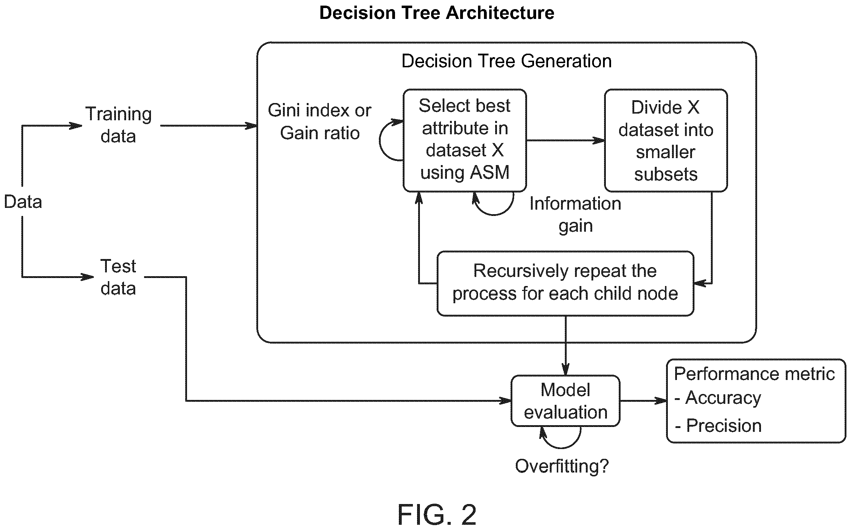

Figure 2: Decision Tree Architecture

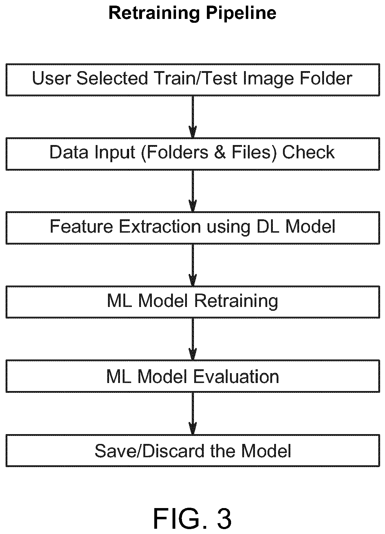

Figure 3. Retraining Pipeline

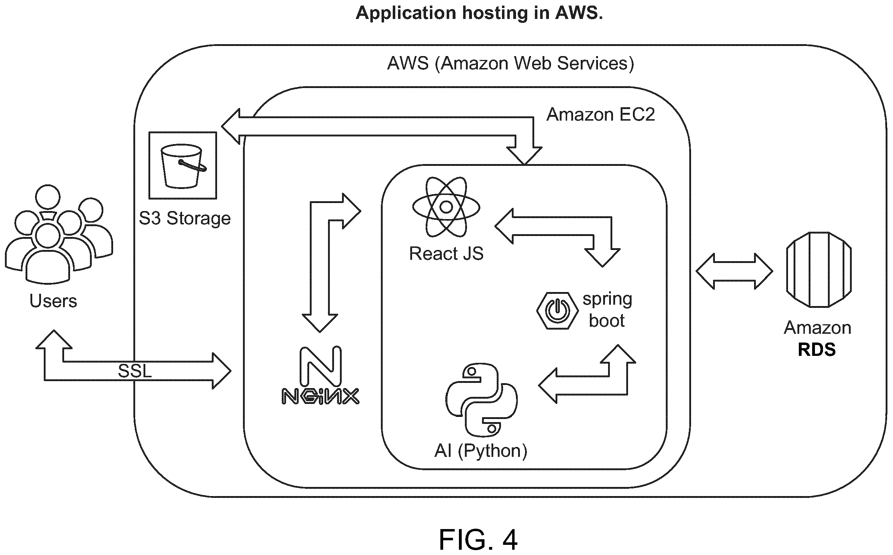

Figure 4: Application hosting in AWS.
Figure 5: Model Performance for Transfer learning (based on CNN)
Figure 6: Model Performance for ensemble learning
Figure 7: Model Performance for Transfer learning (based on CNN) with deep learning features.
Figure 8: Model Performance for Random Forest
Figure 9: Model Performance for AdaBoost
Figure 10: Model Performance for K nearest Neighbor
Figure 11: Model Performance for Decision tree classifier
Figure 12: Comparison study between two experiments
Figure 13: Graphical Representation of Descriptive Statistics for Air and Oil
Fig 14: Distribution Comparison between Morpholical features for Air and Oil
Fig 15: Distribution of Circularity vs Aspect Ratio for all sub-visible particles
Fig 16: Visual Representation of Clusters from both experiments
Fig 17: Number of samples present in each cluster

### Detailed Description.

The present invention provides a solution and improvement to the existing methods of determining the presence of particulate matter in samples that are analyzed with imaging technologies. In particular for samples that are obtained from manufacturing processes for the production of biologic medicinal products, containing for example drug substance or drug product. The methods herein provided are computer implement methods.

In one embodiment the method provides a computer implemented method to determine sub-visible particles in a sample comprising:
a. Obtaining one or more data files, such as raw data formats, and/or images of a sample from an analytical equipment, wherein the data files represent image information from an analyzed sample,
b. Extracting morphological feature information from the data files and/or images from the analyzed sample,
c. Classifying each image of the analyzed sample using a trained convolutional neural network in major categories,
d. Clustering of the images within the major categories into sub-clusters based on image similarity feature information from the sample images,
e. Applying a statistical analysis comparing within the major categories the sub-clusters on morphological features and/or image similarity to obtain a statistical value for one sample, and
f. Evaluating the statistical values to determine the distribution of sub-visible particles in a sample.

In another embodiment the method provides a computer implemented method for batch release based on subvisible particles in a sample from a batch comprising:
a. Obtaining one or more data files, such as raw data formats, and/or images of a sample from an analytical equipment, wherein the data files represent image information from an analyzed sample image,
b. Extracting morphological feature information from the data files and/or images from the analyzed sample,
c. Classifying each image of the analyzed sample using a trained convolutional neural network in major categories,
d. Clustering of the images within the major categories into sub-clusters based on morphological feature information from the sample images,
e. Applying a statistical analysis comparing within the major categories the sub-clusters on morphological features and/or image similarity to obtain a statistical value for one sample,
f. Comparing the statistical value for one sample with a reference sample, and
g. Releasing the batch from which the sample is obtained if the sample is within a predetermined confidence level compared to the reference sample

The method of the present invention can be used for the sample that is selected from a sample that is a drug substance sample or a drug product sample.

Exemplary morphological features that can be extracted in the method of the present invention include ECD, area, perimeter, circularity, max feret diameter, aspect ratio, intensity, x-position, y-position, time (%), time (min) and any combination thereof.

In the methods of the present invention the images are classified in major categories, such major categories can be "air and oil", "dark-proteinaceous", "fibres" and "proteinaceaous". The method further can provide in each major category sub-clusters of images wherein the number of sub-clusters is from 2 to 10, such as in certain embodiments from 3 to 5 sub-clusters, or the number of sub-clusters in certain embodiments is 3.

A convolutional neural network can be used in the method of the present invention. Any such convolutional neural network, such as for example Inception V3 can be used.

In yet another embodiment there is provided a non-transitory computer readable medium comprising machine readable instructions arranged, when executed by one or more processors, to cause the one or more processors to carry out the method of the current invention.

### Examples

The microscopic Flow Imaging (MFI) dataset belonging to different biopharmaceutical sub-visible particles like fibers, air and oil, proteinaceous, dark and proteinaceous were used for the study.

**Table 1: Datasets**

| | **Air and oil** | **Fiber** | **Proteinaceous** | **Dark and Proteinaceous** |
|---|---|---|---|---|
| Number of samples | 2173 | 2235 | 16363 | 5223 |
| Complexity | YTF | YTF | YTF | YTF |
| Training Set | 1197 | 2037 | 11130 | 3876 |
| Validation Set | 462 | 111 | 462 | 185 |
| Test Set | 514 | 874 | 4771 | 1662 |

### Data (Preparation, standardization, alignments, annotations, pre-processing)

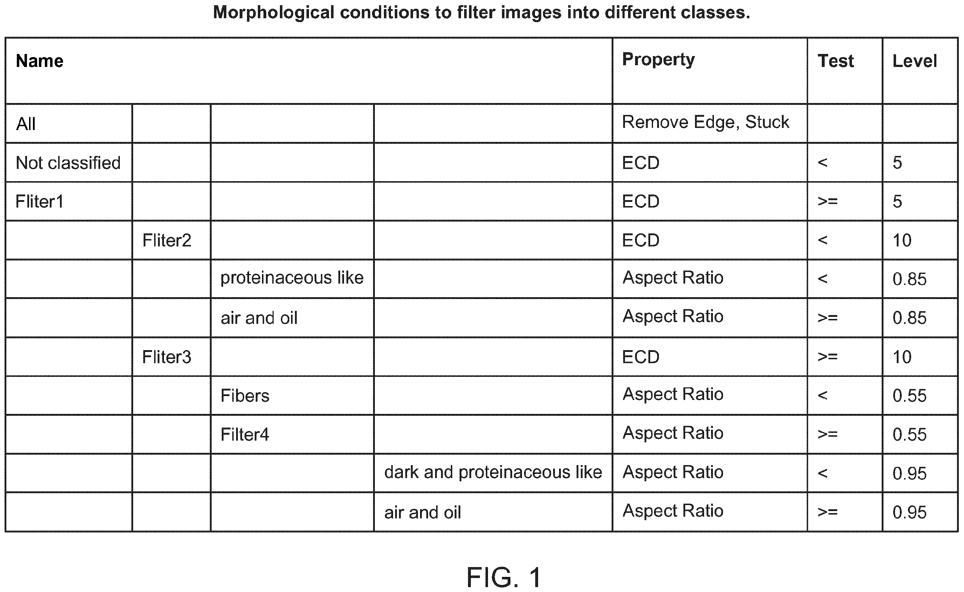

The bio particle raw image data and morphological features obtained from microscopic flow image devices. The raw image obtained from the MFI device had no information regarding the classes (unlabeled). However, the report generated by the device consisted of certain morphological features of the particle. A python-based classification script was used to filter the images based on morphological conditions (figure 1). Later, the filtered images based on morphological conditions are validated by domain experts and checked for correctness. Manually validated and corrected data were used as ground truth for training deep learning based model.

The classification results obtained from the analysis done on initial morphological features were not reliable on all situations. Hence, a deep learning-based approach for feature extraction was used to obtain additional unique features for different bioparticles which are critical to improving the performance of Al-based particle classification. The more relevant the features, it is better to train the model for classification. A total of 2065 features were obtained that includes 17 features extracted from the MFI device and 2048 features extracted from the Deep learning model. This morphological feature information with respect to each image was stored in a .csv file. These features were used to train the classification model and hence improve performance.
The size of the images obtained was inconsistent. Thus, the MFI images were standardized and resized to 299 to ensure that there is no inconsistency across the dataset.

### Deep Learning Model

A deep learning approach was explored to develop an artificial intelligence-based algorithm. The models were developed using Keras and TensorFlow framework, along with other libraries such as OpenCV, NumPy, scikit-learn, pandas, matplotlib etc. A Convolutional Neural Network (CNN) based architecture was used to extract features from the last but one layer of the architecture. A convolutional neural network is a feed-forward neural network that is generally used to analyze visual images by processing data with a grid-like topology. A CNN has multiple hidden layers that help in extracting information from an image. The four important layers in CNN are the convolution layer, ReLU layer, pooling layer, and fully connected layer.

In our study, inception_v3 architecture for extraction of features from images was considered. Total of 2065 features were extracted along with morphological features. Inception v3 is an image recognition model that has been shown to attain greater than 78.1% accuracy on the ImageNet dataset. These features improve the training and accuracy of the model.

### Baseline Architecture

### Inception V3

Several architectures were explored by iteratively testing and fine tuning the hyper parameters as showcased in Table 1. The performance of the various models was evaluated against a fixed subset of the data consisting of all the four sub-particles. Here, a transfer learning based CNN approach has been used to extract the features. Inception-v3 has been frequently applied in image recognition. The model is made up of symmetric and asymmetric building blocks, including convolutions, average pooling, max pooling, concatenations, dropouts, and fully connected layers. The number of parameters of Inception-v3 is fewer than half that of AlexNet (60,000,000) and fewer than one fourth that of VGGNet (140,000,000); additionally, the number of floating-point computations of the whole Inception-v3 network is approximately 5,000,000,000, which is much larger than that of Inception-v1 (approximately 1,500,000,000). These characteristics make Inception-v3 more practical, that is, it can be easily implemented in a common server to provide a rapid response service. The image size input into Inception-v3 was 299 × 299. A total of 2048 features were extracted from the last but one layer of the network. The first layers of any neural network are basically responsible for identifying low-level features, such as edges, colors, and blobs, but the last layers are usually very specific to the task that's trained for.

**Table 2: Parameters of baseline architecture**

| Layer | Output Shape | Number of Parameters |
|---|---|---|
| keras_layer | (None, 2048) | 21802784 |
| dropout | (None, 2048) | 0 |
| Dense | (None, 4) | 8196 |

| | | |
|---|---|---|
| Total params: 21,810,980 Trainable params: 21,776,548 Non-trainable params: 34,432 | | |

### Decision Tree

A decision tree is a non-parametric supervised learning algorithm, which is utilized for both classification and regression tasks. It has a hierarchical, tree structure, which consists of a root node, branches, internal nodes and leaf nodes. Decision tree learning employs a divide and conquer strategy by conducting a greedy search to identify the optimal split points within a tree. This process of splitting is then repeated in a top-down, recursive manner until all, or the majority of records have been classified under specific class labels. To reduce complexity and prevent overfitting, pruning is usually employed; this is a process, which removes branches that split on features with low importance. The model's fit can then be evaluated through the process of cross-validation. While there are multiple ways to select the best attribute at each node, two methods, information gain, and Gini impurity, act as a popular splitting criterion for decision tree models. They help to evaluate the quality of each test condition and how well it will be able to classify samples into a class. Entropy is a concept that measures the impurity of the sample values. Its values can fall between 0 and 1. Information gain represents the difference in entropy before and after a split on a given attribute. The attribute with the highest information gain will produce the best split as it's doing the best job at classifying the training data according to its target classification. Gini impurity is the probability of incorrectly classifying random data points in the dataset if it were labeled based on the class distribution of the dataset. Here, 2065 features that combine the initial morphological along with the features obtained from the deep learning model is fed into the machine learning classifier.

### Retraining pipeline

Machine learning and deep learning models are everywhere around us in modern organizations. Every industry has appropriate machine learning and deep learning applications, from banking to healthcare to education to manufacturing, construction, and beyond. One of the biggest challenges in all these ML and DL projects in different industries is model improvement. Continuous training is an aspect of machine learning operations that automatically and continuously retrains machine learning models to adapt to changes in the data before it is redeployed. As soon as the machine learning model is deployed in production, the performance of your model degrades. This is because the model is sensitive to changes in the real world, and user behavior keeps changing with time. Although all machine learning models decay, the speed of decay varies with time. This is mostly caused by data drift. Data drift (covariate shift) is a change in the statistical distribution of production data from the baseline data used to train or build the model. Thus, making it important to monitor and retrain the machine-learning models in production.

In this study, a retraining pipeline has been developed as shown in Figure.1 that provides the user the provision to select the data to be used to retrain the model. The data consists of images and a .csv file with information about the class of each image that is verified by a domain expert. Once the data for retraining is selected, the images are placed into the respective folders. Features are extracted using a deep learning-based approach. The features are then fed into a machine learning model for retraining purposes after which the model is evaluated against a test set. The performance of the model in terms of accuracy is returned once the retraining process is completed, which serves as a metric that helps the user decide whether to save or discard the model.

### User interface and set-up in the cloud

The modular software application was built on a scalable and open architecture system comprising of an independent User Interface (Ul) module built on React. The server-side logic uses java technology stack with Sprint-boot, and an algorithm module built on python. These modules were integrated with REST APIs to allow seamless exchange within the internal services and the application was hosted on a AWS cloud environment. UI module provided the accessibility of the users to the application by modern browsers (Chrome, Microsoft Explorer, Firefox etc). The UI layer communication is driven securely over SSL⁷²technology. The access was permitted through internet-facing URL and accessible to geo-fenced locations/countries. The authentication of users was enabled with SAML 2.0 (Security Assertion Markup Language 2.0) and SSO (Single-Sign-On) based access management. Authorization of the users was done through the IdP (Identity Provider) and OAuth (Open Authorization) technology. A root administrator was created to provide access to required user base by prior configuring their unique identification information (Id and email). User Interfaces built over React JS provided the following functionalities of file upload from browser, Ul-based validations, and display of results and reports. Data management and organization within the entire application was built on MySQL (Amazon RDS) as the database. Upload of the raw data files in ^{∗}.zip folder format which consists of ^{∗}.png and ^{∗}.csv file formats was built and managed with Java/J2EE and Spring Boot as middleware. Scripts were set to check on data conformity of the uploaded files before importing them into the application. Amazon Elastic Compute Cloud (Amazon EC2) was used for building the Web application hosting, back-up and recovery. Storage of source data on application logs, model training and predictions was built using the AWS S3 (Simple Storage Service). The developed baseline architecture was deployed within the algorithm module using python as the programming language. This contained Artificial Intelligence, Machine learning and Neural network-based logic and services. NGINX was used for Web Server and Load balancing.

### Concept Design and Project Execution

### Understanding the datasets and exploration studies on AI

### Exp 1: Transfer learning (based on CNN)

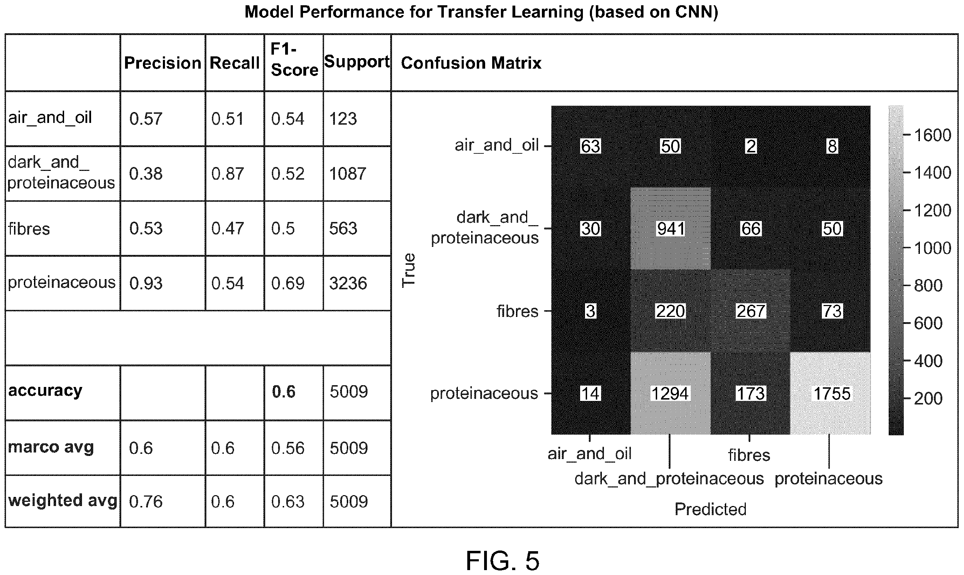

The pre-trained models like inception_v3, ResNet50, ResNet101 models, pre-trained weights, models and checkpoints were collected form tensorflow hub. The image data set is used directly to train the pre-trained models with all layers freezed (these hidden layers are not trained), but the last layer is only trainable. Resnet_v1_50 was the model used to build image classification model. The Training information is displayed in table 3. The classification report is scaled between 0-1. The performance of the model is showcased in figure 5.

**Table 3: Training information**

| **Metric** | |
|---|---|
| Training split | 80 : 20 |
| Total images | 25046 |
| Total train set | 20037 |
| Total validation set | 5009 |

### Exp 2: Ensemble learning algorithms

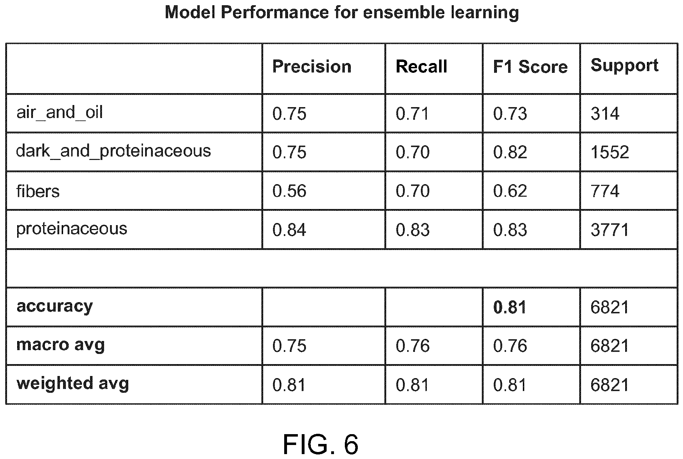

Machine learning algorithms with morphological features Different ensemble learning algorithms such as **decision tree**, **bagging** - **random forest, boosting** - **adaboost, gradient boost** were developed for classification of data into 4 classes such as air and oil, Proteineceous, dark and proteineceous, fiber. Ensemble learning is a general meta approach to machine learning that seeks better predictive performance by combining the predictions from multiple models. These models are known as weak learners. The intuition is that when you combine several weak learners, they can become strong learners. Each weak learner is fitted on the training set and provides predictions obtained. The final prediction result is computed by combining the results from all the weak learners. Ensemble learning techniques have been proven to yield better performance on machine learning problems. The performance of the model is showcased in figure 6.

### Exp 3: Transfer learning (based on CNN) with morphological and deep learning features

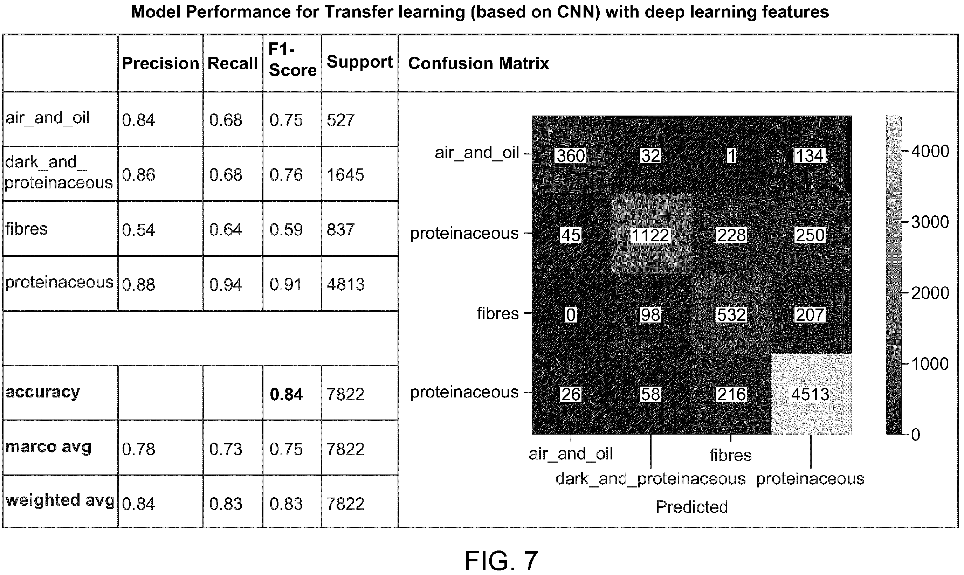

Transfer learning (based on CNN) with morphological features extracted from MFI device and additional deep learning features extracted using image processing techniques. The basic premise of transfer learning is simple: take a model trained on a large dataset and transfer its knowledge to a smaller dataset. The addition of other morphologiocal feature in deep learning model training showcased a improvement in model performance. The Training information is displayed in table 4. The classification report is scaled between 0 - 1. The performance of the model is showcased in figure 7.

**Table 4: Training information**

| **Metric** | |
|---|---|
| Training split | 80 : 20 |
| Total images | 31273 |
| Total train set | 26061 |
| Total validation set | 5212 |
| Total test set | 7822 |

| | |
|---|---|
| Classification of particles into different classes was explored on multiple machine learning algorithms like decision tree, random forest, Adaboost and K - nearest neighbor | |

### Exp 4: Random Forest

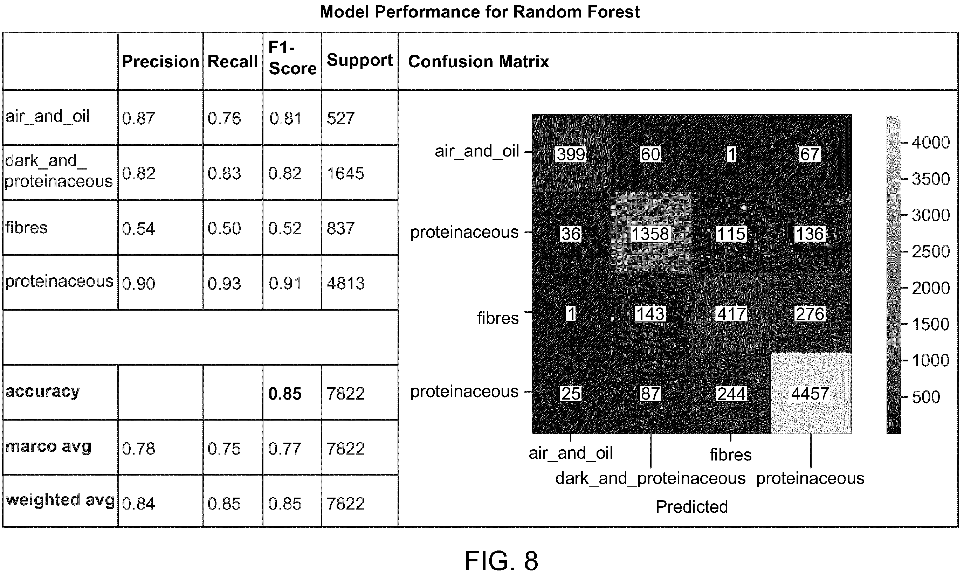

Machine learning algorithm (Random Forest) with morphological features identified by domain experts and deep learning features extracted using image processing techniques. The random forest is a classification algorithm consisting of many decisions trees. It uses bagging and feature randomness when building each individual tree to try to create an uncorrelated forest of trees whose prediction by committee is more accurate than that of any individual tree. The Training information is displayed in table 4. The classification report is scaled between 0 - 1. The performance of the model is showcased in figure 8.

### Exp 5: AdaBoost

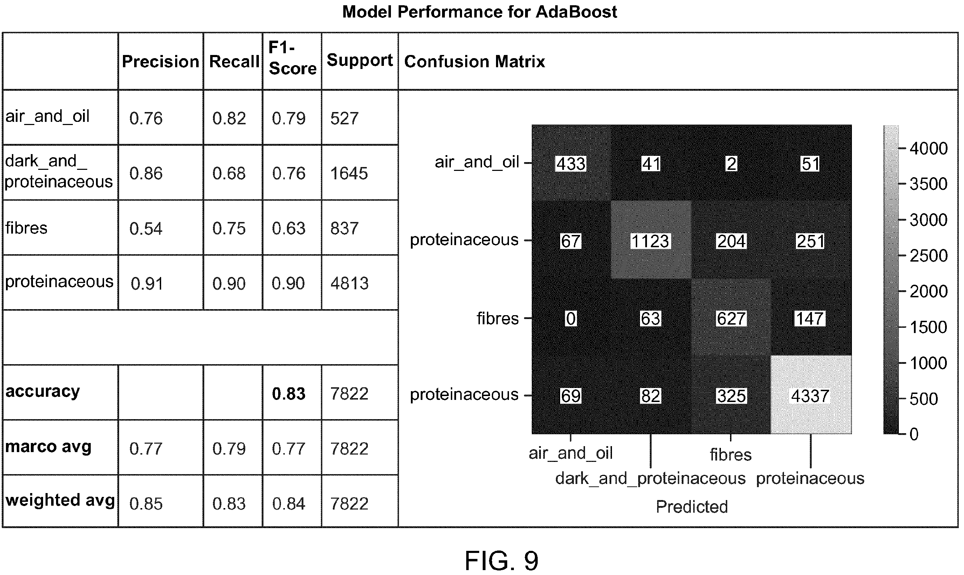

Machine learning algorithm (AdaBoost) with morphological features identified by domain experts and deep learning features extracted using image processing techniques. AdaBoost algorithm, short for Adaptive Boosting, is a Boosting technique used as an Ensemble Method in Machine Learning. It is called Adaptive Boosting as the weights are re-assigned to each instance, with higher weights assigned to incorrectly classified instances.. The Training information is displayed in table 4. The classification report is scaled between 0 - 1. The performance of the model is showcased in figure 9.

### Exp 6: K nearest Neighbor

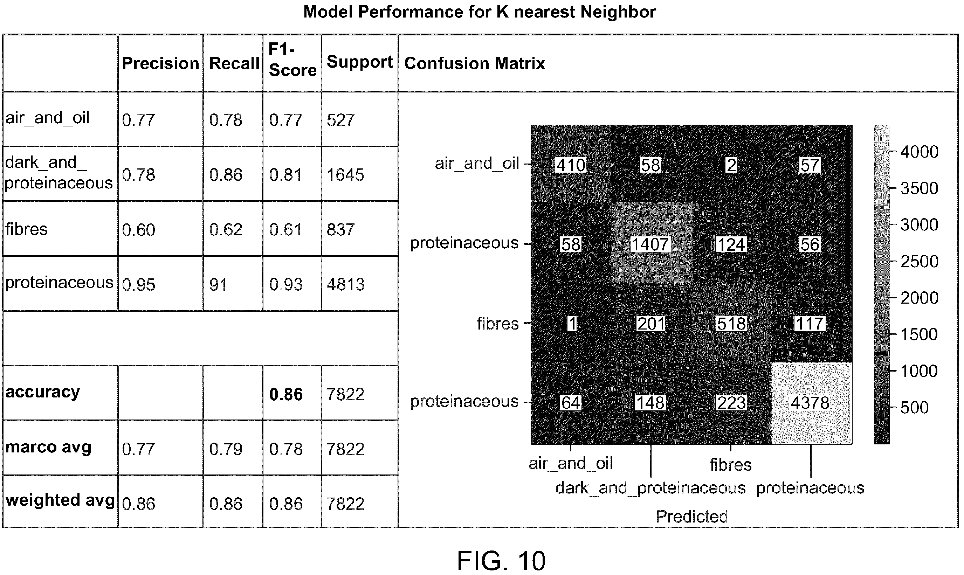

Machine learning clustering algorithm K nearest Neighbor (KNN) with morphological features identified from MFI devices and deep learning features extracted using image processing techniques.KNN, is a non-parametric, supervised learning classifier, which uses proximity to make classifications or predictions about the grouping of an individual data point. The Training information is displayed in table 4. The classification report is scaled between 0 - 1. The performance of the model is showcased in figure 10.

### Final Architecture

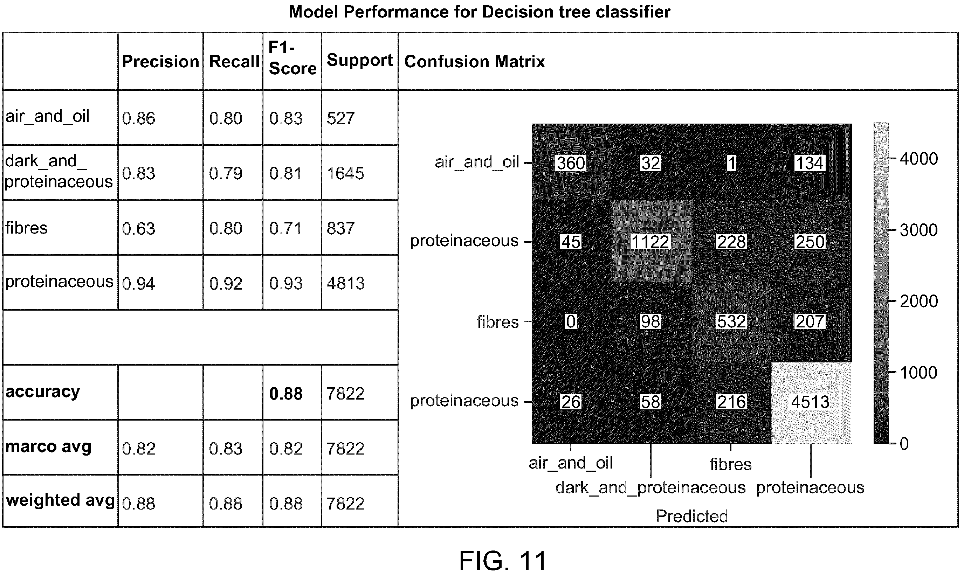

A deep learning-based approach (Inception V3) was implemented to extract additional features apart from morphological features obtained from MFI devices. A total of 2065 features that combines the morphological features and deep learning features were fed to machine learning classifier (Decision tree) to classify the sub visible particles into respective classes. The Training information is displayed in table 4. The classification report is scaled between 0 - 1. The performance of the model is showcased in figure 11.

### Comparison study

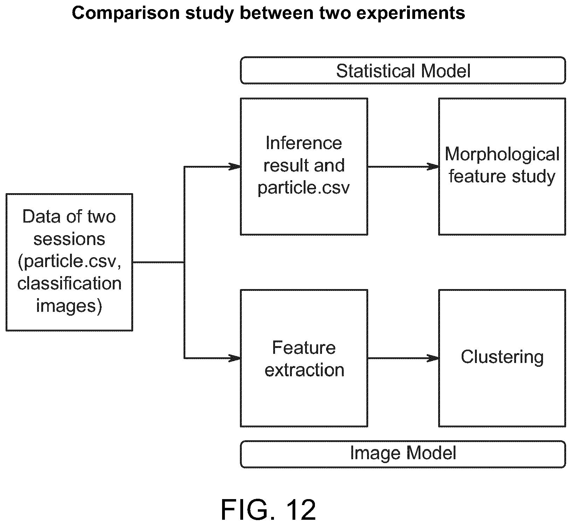

The presence of drug aggregates and sub-visible particles in therapeutic protein products has increasingly become a field of concern for both the pharmaceutical industry and regulatory agencies Aggregates in the micron range have been implicated in adverse reactions and/or reduction in the efficacy of therapeutic products. The sub-visible particles may vary in size, structure, and by many other features in different experiments. Different experiments include mechanical agitation (leading to exposure to hydrophobic air/water interfaces), chemical alteration, and/or temperature extremes. Protein aggregates can also be generated through protein nucleation around nano/micro-scale contaminants in the product such as silica particles shed from containers, fibers shed from filters, or metal particles shed from production equipment. Hence, a comparison study between the samples from two experiments helps researchers to identify new or unique samples and gain comprehensive knowledge. Here, the comparison study consists of two parts as shown in Figure 12.

### Statistical Analysis

A statistical analysis has been done on the initial morphological features obtained. The statistical analysis takes morphological features in .csv format obtained from the MFI device for both experiments as input. The .csv files consists of the morphological features and inference results that are user corrected. It includes the classification results that gives the count of the sub-particles, quantity in percentage and its concentration with respect to the volume for each of the experiments as showcased in Table 5. A data table (evinced in Table 4) is generated that provides a descriptive statistic (Minimum, Maximum, Mean and Standard Deviation) of the morphological features (ECD, Area, Perimeter, Circularity, Max Feret Diameter and Aspect Ratio) for each of the sub-particles. Descriptive statistics are very important because by simply presenting the raw data it would be hard to visualize what the data was showing, especially if there was a lot of it. Descriptive statistics, therefore, enables to present the data in a more meaningful way, which allows simpler interpretation of the data. It also provides information on how much percent a study deviates from the other study in terms of these four metrics and highlights the top three deviations in each sub-particle as shown in Table 7.

**Table 5. Classification Result for an experiment**

| **Classification Results** | | | |
|---|---|---|---|
| **Element Name** | **Count** | **% All** | **Concentration** |
| All | 811 | | |
| proteinaceous | 363 | 44.76 | 27923.08 |
| air and oil | 242 | 29.84 | 18615.38 |
| fibers | 88 | 10.85 | 6769.23 |
| dark & proteinaceous | 118 | 14.55 | 9076.92 |

**Table 6. Descriptive Statistical Summary**

| **Data Table** | | | | | | | | | |
|---|---|---|---|---|---|---|---|---|---|
| **Particle Category** | **Parameter** | **Sample 1** | | | | **Sample 2** | | | |
| | | **Mean** | **Max** | **Min** | **Std. Dev** | **Mean** | **Max** | **Min** | **Std. Dev** |
| air_and_oil | ECD | 15.63 | 32.875 | 8.375 | 5.492 | 21.196 | 63.125 | 10.375 | 13.048 |
| | Area | 346.918 | 1007.0 | 150.0 | 176.452 | 589.857 | 2867.0 | 191.0 | 675.622 |
| | Perimeter | 89.139 | 189.38 | 52.53 | 31.5 | 121.975 | 423.22 | 63.18 | 90.051 |
| | Circularity | 0.746 | 0.89 | 0.5 | 0.089 | 0.706 | 0.8 | 0.45 | 0.088 |
| | Max Feret Diameter | 19.946 | 53.375 | 9.125 | 9.751 | 23.339 | 125.875 | 9.875 | 28.736 |
| | Aspect Ratio | 0.707 | 0.97 | 0.2 | 0.2 | 0.726 | 0.99 | 0.27 | 0.184 |
| dark _and_proteinaceous | ECD | 9.111 | 103.875 | 5.125 | 7.821 | 10.514 | 103.125 | 5.125 | 11473 |
| | Area | 197.563 | 6614.0 | 86.0 | 370.192 | 265.644 | 6528.0 | 86.0 | 581.515 |
| | Perimeter | 62.217 | 492.74 | 36.14 | 4291 | 67.684 | 958.54 | 36.14 | 83.075 |
| | Circularity | 0.768 | 0.92 | 0.32 | 0.104 | 0.812 | 0.94 | 0.3 | 0.099 |
| | Max Feret Diameter | 12.395 | 129.125 | 4.875 | 12.759 | 14.155 | 387.375 | 4.625 | 31.818 |
| | Aspect Ratio | 0.716 | 0.98 | 0.09 | 0.202 | 0.827 | 1.0 | 0.1 | 0.165 |
| fibres | ECD | 18.52 | 60.375 | 6.875 | 15.663 | 21.391 | 87.125 | 6.875 | 18.536 |
| | Area | 541.211 | 2657.0 | 120.0 | 723.221 | 672.312 | 4875.0 | 120.0 | 1136.872 |
| | Perimeter | 108.176 | 326.75 | 45.21 | 91.625 | 117.414 | 487.23 | 45.8 | 103.196 |
| | Circularity | 0.746 | 0.92 | 0.44 | 0.124 | 0.741 | 0.9 | 0.51 | 0.105 |
| | Max Feret Diameter | 24.125 | 81.125 | 7.375 | 24.121 | 26.562 | 129.375 | 6.625 | 28.621 |
| | Aspect Ratio | 0.756 | 0.98 | 0.35 | 0.204 | 0.752 | 0.99 | 0.34 | 0.184 |
| proteinaceous | ECD | 8.85 | 33_125 | 5.125 | 3.662 | 8.121 | 20.125 | 5.125 | 2.171 |
| | Area | 166.182 | 1014.0 | 86.0 | 100,877 | 145.857 | 484.0 | 88.0 | 49.877 |
| | Perimeter | 57.497 | 188.65 | 37.38 | 20.523 | 51.952 | 116.95 | 38.8 | 11.415 |
| | Circularity | 0.793 | 0.93 | 0.48 | 0.076 | 0.824 | 0.92 | 0.56 | 0.065 |
| | Max Feret Diameter | 10.913 | 53_875 | 5.125 | 6.713 | 8.862 | 31.125 | 5.125 | 3.493 |
| | Aspect Ratio | 0.759 | 0.99 | 0.17 | 0.175 | 0.861 | 1.0 | 0.26 | 0.135 |

**Table 7: Deviation in descriptive statistics**

| **Summary** | | | | | | |
|---|---|---|---|---|---|---|
| **Particle Category** | **Parameter** | **% of deviation from sample1 to sample2** | | | | **Top 3 deviations** |
| | | **Mean** | **Max** | **Min** | **Std. Dev** | |
| air_and_oil | ECD | -26.3% | -47.9% | -19.3% | -57.9% | |
| | Area | -41.2% | -64.9% | -21.5% | -73.9% | max value of Area |
| | Perimeter | -26.9% | -55.3% | 16.9% | -65.0% | max value of Max Feret Diameter |
| | Circularity | 5.7% | 11.2% | 11.1% | 1.1% | max value of Perimeter |
| | Max Feret Diameter | -29.6% | -57.6% | -7.6% | -66.1% | |
| | Aspect Ratio | -2.6% | -2.0% | -25.9% | 8.7% | |
| dark and_proteinaceous | ECD | -13.3% | 0.7% | 0.0% | -318% | |
| | Area | -29.6% | 1.3% | 0.0% | -36.3% | max value of Max Feret Diameter |
| | Perimeter | -.8.1% | -48.6% | 0.0% | -48.3% | max value of Perimeter |
| | Circularity | -5.4% | -2.1% | 6.7% | 5.1% | mean value of Area |
| | Max Feret Diameter | -29.6% 12.4% | -66.7% | 5.4% | -59.9% | |
| | Aspect Ratio | 13.4% | -2.0% | -10.0% | 22.4%. | |
| fibres | ECD | 13.4% | -30.7% | 0.0% | -15.5% | |
| | Area | -19.5% | -45.5% | 0.0% | -36,4% | max value of Area |
| | Perimeter | -7.9% | -32.9% | -1.3% | -11.2% | max value of Max Feret Diameter |
| | Circularity | 0.7% | 2.2% | -13.7% | 18.1% | max value of Perimeter |
| | Max Feret Diameter | -9.2% | -37.3% | 11.3% | 15.7% | |
| | Aspect Ratio | 0.5% | -1.0% | 2.9% | 10.9% | |
| proteinaceous | ECD | 9.0% | 64.6% | 0.0% | 68.7% | |
| | Area | 13.9% | 109.5% | -2.3% | 102.3% | max value of Area |
| | Perimeter | 10.7% | 61.3% | -3.7% | 79.8% | max value of Max Feret Diameter |
| | Circularity | -3.8% | 11% | -14.3% | 16.9% | max value of ECD |
| | Max Feret Diameter | 23.1% | 73.1% | 0.0% | 92.2% | |
| | Aspect Ratio | 11.8% | -1.0% | -34.6% | 29.6% | |

| | | | | | | |
|---|---|---|---|---|---|---|
| 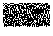 <±10% 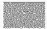 ±10 to ±30% 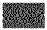 >±30% | | | | | | |

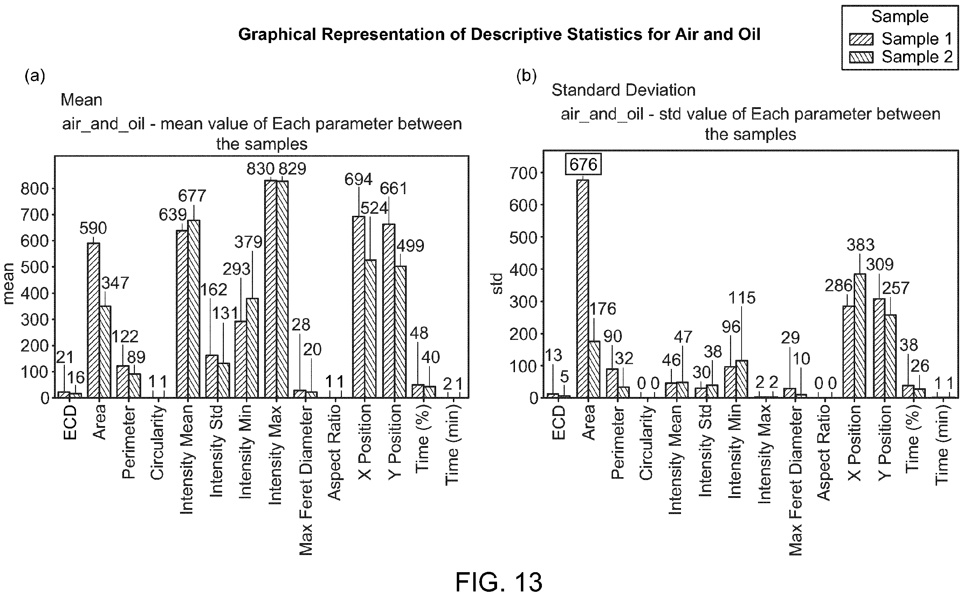

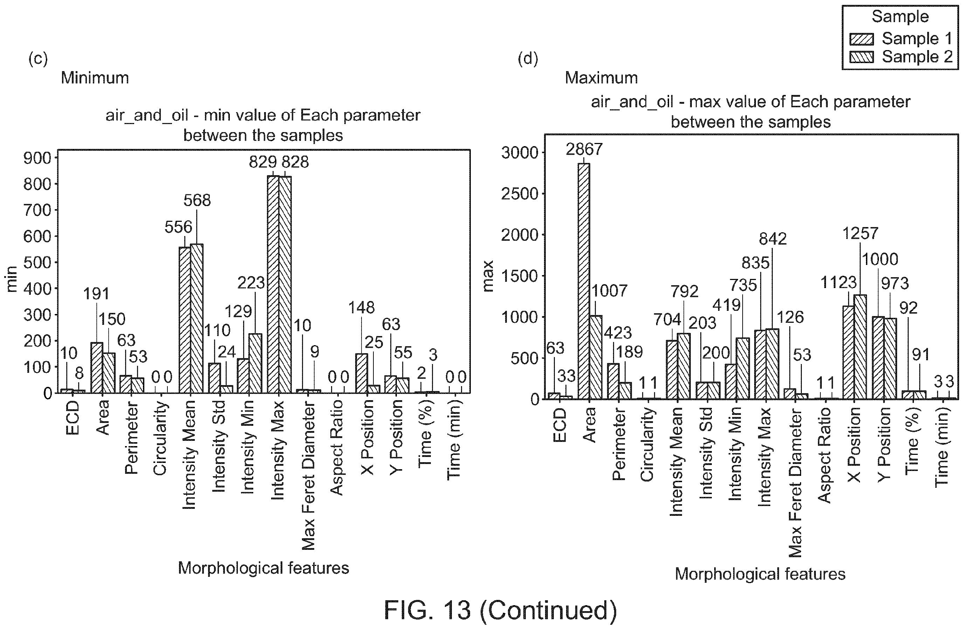

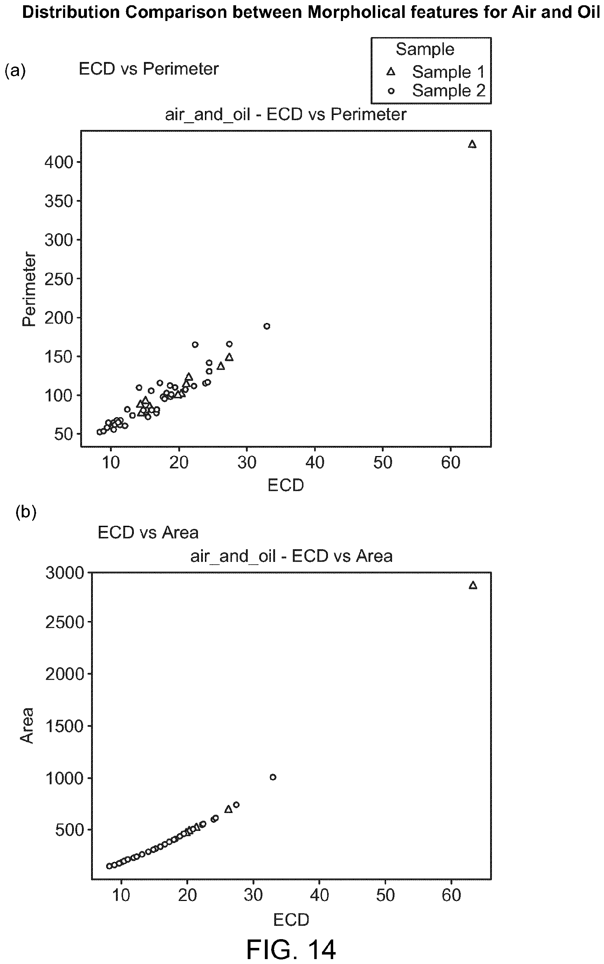

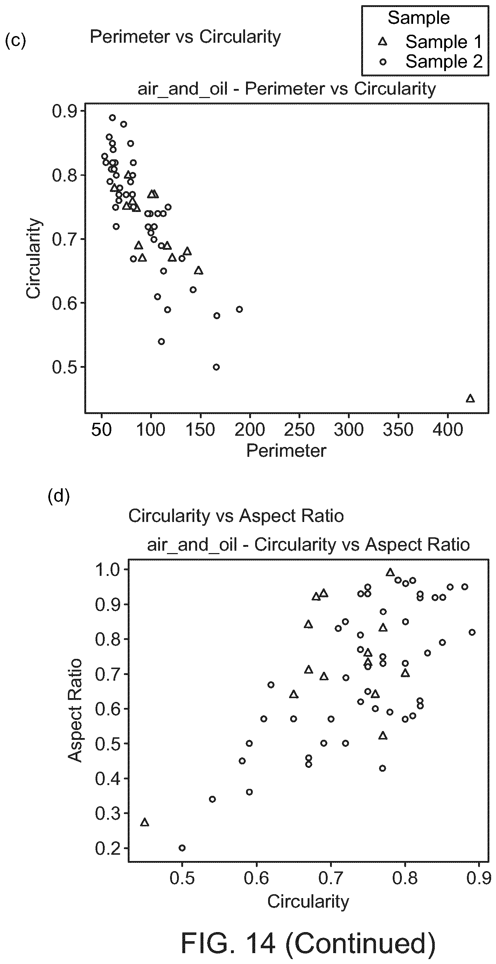

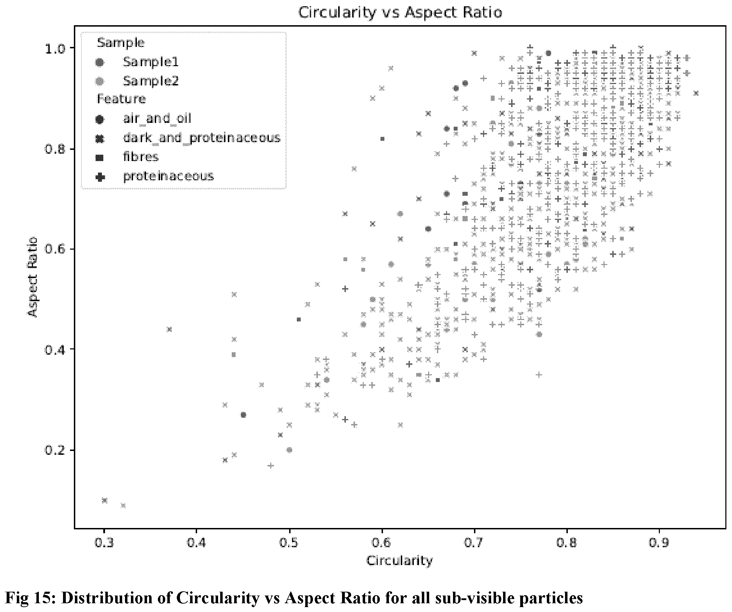

A summary on particle size distribution for each sub-particle is generated that provides information regarding the count of particles with respect to size of the features in macrons. The size range fall under four categories (< 5mm, 5 - 10mm, >=10mm and >=25mm). The comparison study also provides a graphical representation of the descriptive statistics, the distribution of the morphological features, the comparison of distribution against different combinations of morphological features, and particle size distribution for each sub-particle and all together. A few of the comparisons are showcased in Figure 13,14 and 15.

### Image Analysis

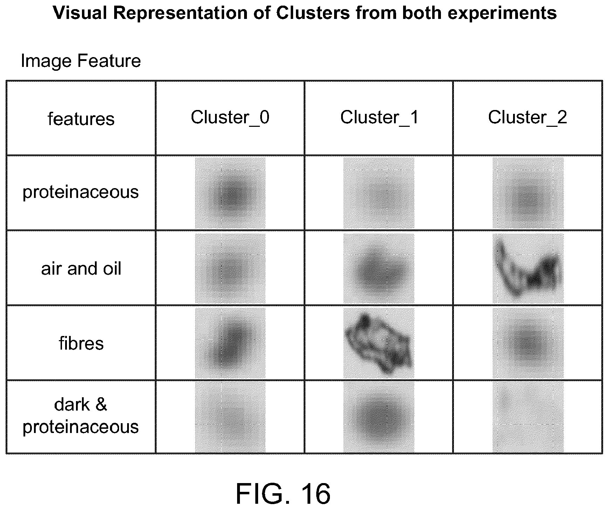

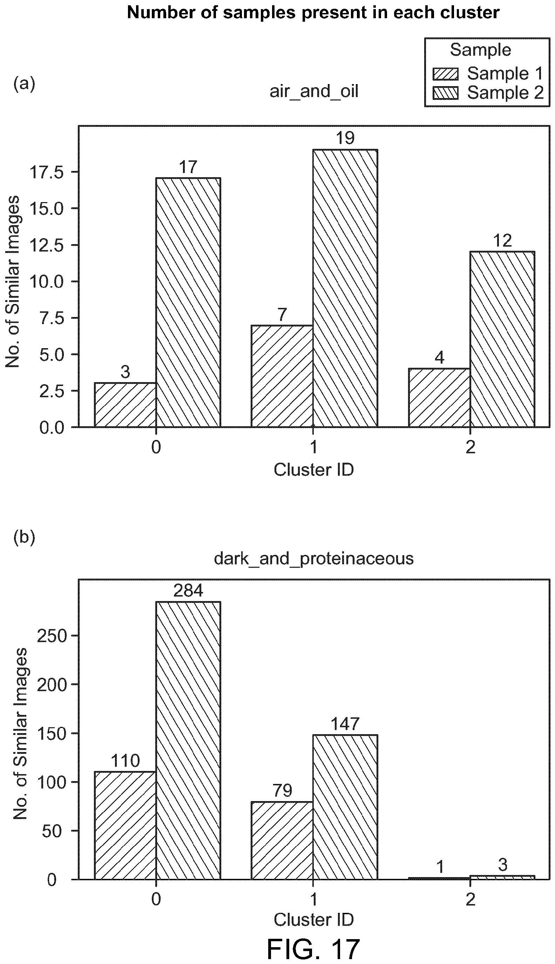

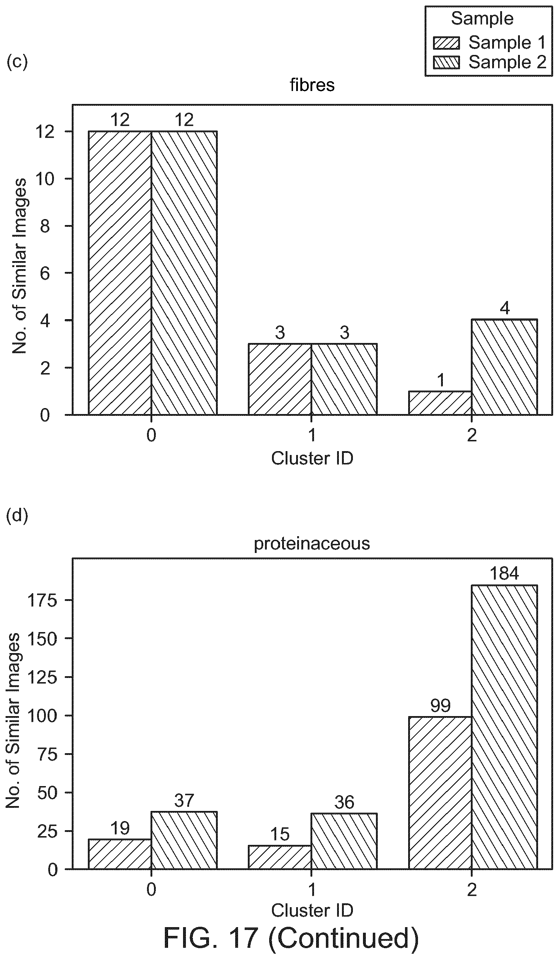

The image analysis includes clustering of the features extracted from images for each particle. Clustering of the images based the features and intensity helps to identify the any new or different molecules. It also helps to identify the outliers, or any misclassifications present in each of the sub-visible particles. It also visualizes the images belonging to each cluster and a graphical representation that gives a count on the number of samples present in each of the clusters. The image visualizations are as represented in Figure 16 and the graphical representations are showcased in Figure 17

### Model performance and management

The AI models are built from the training data and validated on the test data. The validation of the models defines its performance in terms of its quality. Therefore, the CBA: *Definition of criteria on model management and performance monitoring* has a high relevance for the use of AI models in the routine.

**Table 8: Model Performance Metrics**

| Architecture | Description | # Test data | # Features | Accuracy (in %) |
|---|---|---|---|---|
| Architecture 1 | Transfer learning (based on CNN) with Morphological features | 7822 | 17 | 60 |
| Architecture 2 | Ensemble learning algorithms | 7822 | 17 | 81 |
| Architecture 3 | Transfer learning (based on CNN) with morphological features and deep learning features - **Inception V3** | 7822 | | |
| Architecture 4 | Machine learning algorithm (Decision Tree) with morphological features and deep learning features | 7822 | 2065 | 88 |
| Architecture 5 | Machine learning algorithm (Random Forest) with morphological features and deep learning features | 7822 | 2065 | 85 |
| Architecture 6 | Machine learning algorithm (AdaBoost) with morphological features and deep learning features | 7822 | 2065 | 83 |
| Architecture 7 | Clustering algorithm (KNN) with morphological features and deep learning features | 7822 | 2065 | 86 |

## Claims

1. A computer implemented method to determine sub-visible particles in a sample comprising:
a. Obtaining one or more data files, such as raw data formats, and/or images of a sample from an analytical equipment, wherein the data files represent image information from an analyzed sample,
b. Extracting morphological feature information from the data files and/or images from the analyzed sample,
c. Classifying each image of the analyzed sample using a trained convolutional neural network in major categories,
d. Clustering of the images within the major categories into sub-clusters based on image similarity feature information from the sample images,
e. Applying a statistical analysis comparing within the major categories the sub-clusters on morphological features and/or image similarity to obtain a statistical value for one sample, and
f. Evaluating the statistical values to determine the distribution of sub-visible particles in a sample.

2. A computer implemented method for batch release based on subvisible particles in a sample from a batch comprising:
a. Obtaining one or more data files, such as raw data formats, and/or images of a sample from an analytical equipment, wherein the data files represent image information from an analyzed sample image,
b. Extracting morphological feature information from the data files and/or images from the analyzed sample,
c. Classifying each image of the analyzed sample using a trained convolutional neural network in major categories,
d. Clustering of the images within the major categories into sub-clusters based on morphological feature information from the sample images,
e. Applying a statistical analysis comparing within the major categories the sub-clusters on morphological features and/or image similarity to obtain a statistical value for one sample,
f. Comparing the statistical value for one sample with a reference sample, and
g. Releasing the batch from which the sample is obtained if the sample is within a predetermined confidence level compared to the reference sample.

3. The method of any of the preceding claims, wherein the sample is selected from a sample that is a drug substance sample or a drug product sample.

4. The method of any preceding claim, wherein the morphological feature information is selected from ECD, area, perimeter, circularity, max feret diameter, aspect ratio, intensity, x-position, γ-position, time (%), time (min) and any combination thereof.

5. The method of any preceding claim, wherein the major categories are selected from "air and oil", "dark-proteinaceous", "fibres" and "proteinaceaous".

6. The method of any of the preceding claims, wherein the number of sub-clusters is from 2 to 10.

7. The method of claim 6, wherein the number of sub-clusters is from 3 to 5.

8. The method of any of claims 6 or 7, wherein the number of sub-clusters is 3.

9. The method of any of the preceding claims, wherein the convolutional neural network is Inception V3.

10. A non-transitory computer readable medium comprising machine readable instructions arranged, when executed by one or more processors, to cause the one or more processors to carry out the method of any of claims 1 to 9.
